(19) **Europäisches Patentamt**
**European Patent Office**
**Office européen des brevets**

(11) **EP 2 367 333 A2**

(12) **EUROPEAN PATENT APPLICATION**

(43) Date of publication:
**21.09.2011 Bulletin 2011/38**

(51) Int Cl.:
*H04L 27/26* (2006.01)    *H04B 7/26* (2006.01)
*H04B 7/04* (2006.01)

(21) Application number: **11158198.9**

(22) Date of filing: **26.01.2007**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(30) Priority: **27.01.2006 US 762564 P**
**04.04.2006 US 789265 P**
**18.12.2006 US 612450**

(62) Document number(s) of the earlier application(s) in accordance with Art. 76 EPC:
**07710341.4 / 2 005 686**

(71) Applicant: **Qualcomm Incorporated**
**San Diego, CA 92121-1714 (US)**

(72) Inventor: **Walker, Gordon Kent**
**San Diego, CA, 92121-1714 (US)**

(74) Representative: **Wegner, Hans et al**
**Bardehle Pagenberg**
**Postfach 86 06 20**
**81633 München (DE)**

Remarks:
This application was filed on 15-03-2011 as a divisional application to the application mentioned under INID code 62.

(54) **Methods and tools for expanding coverage of an OFDM broadcast transmitter via transmit timing advance**

(57) Systems and methods are provided for determining transmitter phase adjustments that advance or delay transmissions from one or more transmitters to increase coverage of a wireless network and mitigate noise in the network. An analysis tool is provided that considers various parameters in a given network configuration and generates predictions for transmitter phase adjustments in view of such configurations.

FIG. 7

**Description**

Claim of Priority under 35 U.S.C. §119

This application claims the benefit of U.S. Provisional Patent Application Serial No. 60/789,265, filed on April 4, 2006, entitled "METHODS FOR EXPANDING COVERAGE OF AN OFDM BRODCAST TRANSMITTER VIA TRANSMIT TIMMING ADVANCE" and U.S. Provision Patent Application Serial No. 60/762,564, filed on January 27, 2006, entitled "METHOD AND APPARATUS FOR DETERMINING SINR" the entirety of which at incorporated herein by reference.

**BACKGROUND**

**I. Field**

The subject technology relates generally to communications systems and methods, and more particularly to systems and methods for expanding coverage in an OFDM broadcast by employing transmitter phase adjusment techniques within wireless networks. Tools are also provided to predict network and phase adjustment based on differing network configuration.

**II. Background**

One technology that has dominated wireless systems is Code Division Multiple Access (CDMA) digital wireless technology. In addition to CDMA, an air interface specification defines FLO (Forward Link Only) technology that has been developed by an industry-led group of wireless providers and is related to Orthogonal Frequency Division Multiplexing (OFDM) protocols. In general, FLO has leveraged the most advantageous features of wireless technologies available and used the latest advance in coding and system design to consistently achieve the highest-quality performance. One goal is for FLO to be a globally adopted standard and is delivered as part of an OFDM Single Frequency Network (SFN).

The above technology was designed in one case for a mobile multimedia environment and exhibits performance characteristics suited ideally for use on cellular handsets. It uses the latest advances in coding and interleaving to achieve the highest quality reception, both for real-time content streaming and other data services. This technology can provide robust mobile performance and high capacity without compromising power consumption. The technology also reduces the network cost of delivering multimedia content by dramatically decreasing the number of transmitters needed to be deployed. In addition, such technology-based multimedia multicasting complements wireless operators cellular network date and voice services, delivering content to the same cellular handsets used on 3G networks.

Wireless systems have been designed to broadcast real time audio and video signals, apart, from non-real time services to mobile users. The respective transmission for such systems is carried out using tall and high power transmitters to ensure wide coverage in a given geographical area. Further, it is common to deploy 3-4 transmitters in most markets to ensure that the wireless signal reaches a significant portion of the population in a given market. When an OFDM signal is designed or configured for SFN operation, it has a specified duration of cyclic prefix. This cyclic prefix has a defined duration. The longer the duration relative to an OFDM symbol the lower the efficiency of the signal in terms of data throughput. The shorter the cyclic prefix the more transmitters required to cover a given geographic area. Unfortunately, when the distance between transmit sites becomes large enough, various transmitters in an OFDM single frequency network may begin to interfere.

**SUMMARY**

The following presents a simplified summary of various embodiments in order to provide a. basic understanding of some aspects of the embodiments. This summary as not an extensive overview. It is not intended to identify key/critical elements or to delineate the scope of the embodiments disclosed herein. Its sole purpose is to present some concepts in a simplified form as a prelude to the more detailed description that is presented later.

Systems and methods are provided for expanding coverage of an OFDM broadcast and mitigating interference in a wireless network. An embodiment allows a reduction in the number of transmitters required to cover a defined broadcast area, with substantially no loss in data throughout. Additionally the average signal to interference and noise ratio (SINR) can be improved by advancing or delaying transmitter broadcasts. In addition, by advancing or delaying wireless broadcasts, noise interference patterns can be shifted to locations where interference is typically not a problem such as shifting interference to a desert region where few wireless communications actually occur. Software tools can be provided to determine noise patterns and predict the amount of transmitter advance or delay to account for such patterns.

In an embodiment, the software tools receive measurements that enable predictions of transmitter advice or signal delay that is employed in a broadcast network using multiple transmitters. Many algorithms assume that transmitters emanating signals are aligned in time using a common central clock such as GPS, for example. However, it is of some advantage in certain broadcast systems to advance/delay transmissions from some of the transmitters with respect, to the central clock to facilitate signal reception and quality throughout the network such as mitigating interference patterns at the fringe of respective networks and/or between transmitter broadcast areas. Various network configurations can be analyzed such as transmitter heights, transmitter powers, transmit times, and channel estimations by respective receiving devices where the software tools then predict SINR which allows adjusting the signal or delay for a given network. Additionally, suitable corrections can be determined for a combination of log normal signal distributions that are applied as part of the network analysis process.

To the accomplishment of the foregoing and related ends, certain illustrative embodiments are described herein in connection with the following description and the annexed drawings. These aspects are indicative of various ways in which the embodiments may be practised, all of which are intended to be covered.

## BRIEF DESCRIPTION OF THE DRAWINGS

Fig. 1 is a schematic block diagram illustrating a wireless network system employing phase adjustments to mitigate signal interference.

Fig. 2 is a block diagram illustrating a prediction tool to determine network phase adjustments.

Fig. 3 illustrates logical modules for determining transmitter phase adjustments.

Fig. 4 illustrates an example system for adjusting timing information in a wireless system.

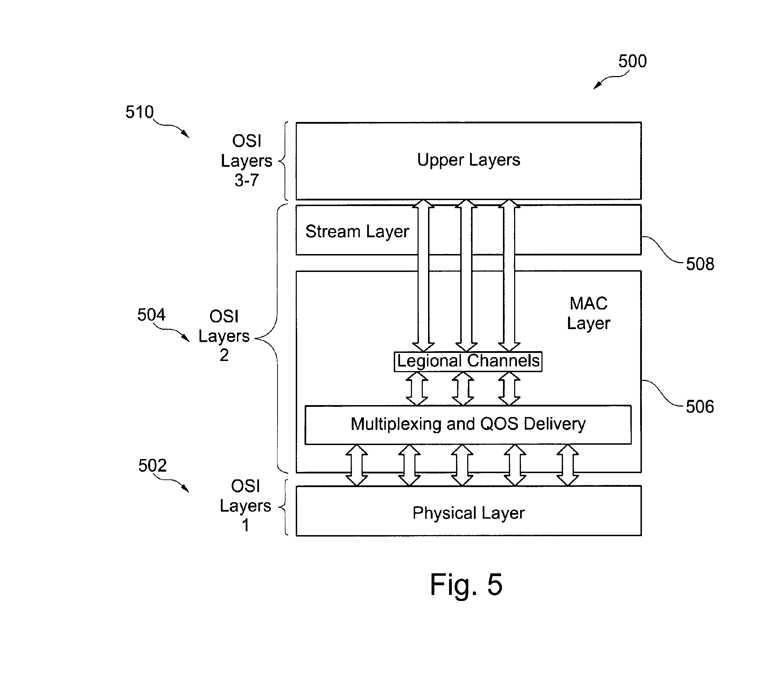

Fig. 5 is a diagram illustrating example network layers for a wireless system.

Fig. 6 is a diagram illustrating an example data structure and signal for a wireless system.

Fig. 7 illustrates an example phase adjustment process for a wireless system.

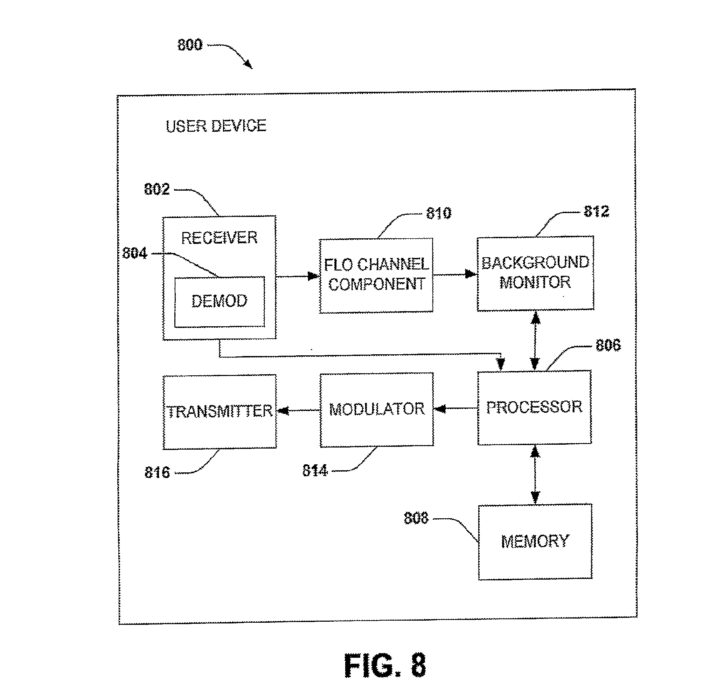

Fig. 8 is a diagram illustrating an example user device for a wireless system.

Fig. 9 is a diagram illustrating an example base for a wireless system.

Fig. 10 is a diagram illustrating an example transceiver for a wireless system.

## DETAILED DESCRIPTION

Systems and methods are provided for determining transmitter phase adjustments that advance or delay transmissions from one or more transmitters to increase coverage of a wireless network and mitigate noise in the network. An analysis tool is provided that considers various parameters in a given network configuration and generates predictions for transmitter phase adjustments in view of such configurations. In an embodiment, a method is provided to increase broadcast coverage in a wireless network. The method includes adjusting a signal phase of at least one transmitter clock in view of determined transmitter parameter information and broadcasting the signal phase across a wireless network to increase broadcast coverage of the wireless network. In another embodiment, a method is provided for determining a signal-to-interference-noise ratio. (SINR). This includes configuring a network having certain number of transmit sites at certain locations within a. geographical area and determining a field strength associated with the respective transmit sites for mobile stations being located at locations within the geographical area Also, then calculating a SINR based on the determined field strengths and adjusting the calculated SINR based on an applicable number of the transmit sites.

It is noted that timing offset can be considered a mismatch in timing between a transmitter clock and a common clock source which leads to synchronization symbols at the transmitter being transmitted at an offset compared to the common clock synchronization signals. For example, in the case of Forward Link Only (FLO) signals, the superframe boundary at the is generally expected to be synchronised to a I PPS signal from a GPS. However, due to timing mismatch or sometimes intentionally for network optimization purposes, the superframe boundary may actually be earlier or delayed with respect to the 1 PPS signal from the GPS. This is referred to as timing offset at the transmitter.

With phase adjustments at the transmitter, the transmitter waveform is essentially modified to regulate the propagation delay perceived by the receiver, irrespective of timing offsets at the transmitter. In this case, even though the transmitter's clock (and hence transmission) maybe precisely synchronized with the common clock source, it is possible that the transmitter waveform is modified to result in skewed propagation delay measurements at the receiver. For example, in the case of FLO employing OFDM signaling, the superframe boundary could be synchronized with the 1 PPS signal from GPS. However, the transmitter could adjust the transmission phase by employing a cyclic shift of the OFDM, symbol butter. The cyclic prefix for the OFDM symbol can be formed based on the cyclically shifted OFDM symbol. With such a signal modification, the delay perceived by the receiver changes with the transmission phase chosen (or equivalently the amount of cyclic shift on the OFDM symbol). This is referred to as phase adjustment at the transmitter.

As used in this application, the terms "component," "network," "system," and the like are intended to refer to a computer-related entity, either hardware, a combination of hardware and software, software, or software in execution. For example, a component may be, but is not limited to being, a process running on a processor, a processor, an object, an executable, a thread of execution, a program, and/or a computer. By way of illustration, both an application running on a communications device and the device can be a. component. One or more components may reside within a process and/or thread of execution and a component may be localized on one computer and/or distributed between two or more computers. Also, these components can execute from various computer readable media having various data structures stored thereon. The components, may communicate over local and/or remote processes such as in accordance with a signal having one or more data packets (*e.g.,* data from one component interacting with another component in a local system, distributed system, and/or across a wired or wireless network such as the Internet).

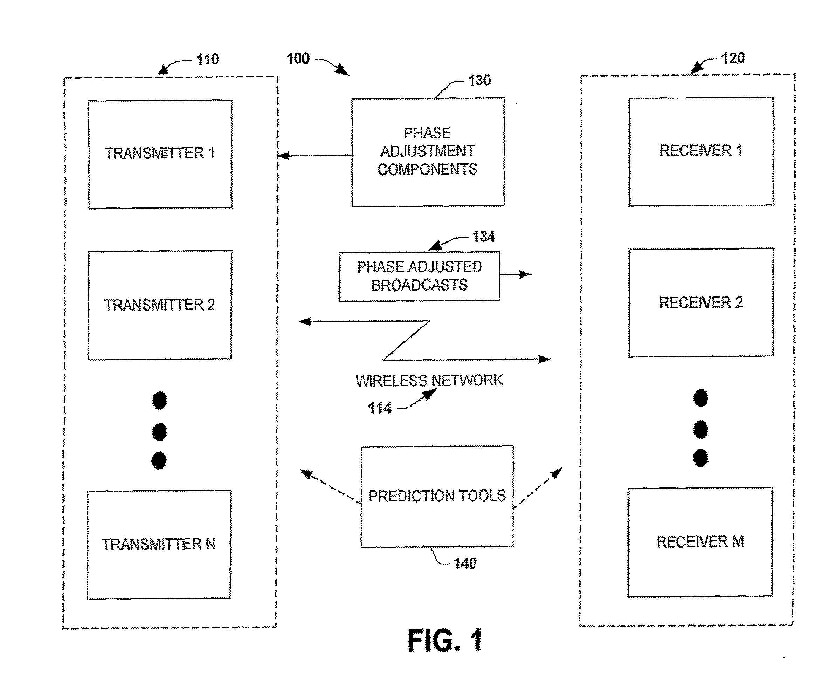

**Fig. 1** illustrates a wireless network system 100 employing transmitter phase adjustments to mitigate signal interference. The system 100 includes one or more transmitters 110 that communicate across a wireless network 114 to one or more receivers 120. The receivers 120 can include substantially any type of communicating device such as a cell phone, computer, personal assistant, hand held or laptop devices, and so forth. In general, timing or signal phase between the transmitters 110 and the receivers 120 may need to be adjusted in various embodiments described herein to facilitate increased coverage for the wireless broadcast. In an embodiment, one or more phase adjustment components 130 can be employed at the transmitters 110 to advance or delay broadcast signals at 134 that have the effect of increasing the coverage of the transmitters who by mitigating potential interference patterns associated with a respective transmitter. Thus, the phase adjustment components 130 facilitate a .reduction in the number of transmitters 110 required to cover a defined area, with substantially no loss in data throughput. Additionally, the average C/(N+I) or signal to interference and noise ratio (SINR) can be improved.

Generally in order to increase the cell size of an OFDM network the duration of the cyclic prefix is increased. Large cells may be introduced into a single frequency network (SFN) nominally dominated by a smaller but cyclic prefix limited cell size by advancing the transmit time of the transmitters 110 for higher power and/or very tall transmit sites. The introduction of these high power early cell increases the average coverage area per cell, which reduces the overall network deployment cost. In addition, the transmit time of the nearby nominally sized cells can be advanced with a positive effect on the SINR observed across the network 114. The large cells have longer delays at the edge of their respective coverage area that potentially interferes with the surrounding smaller cells. By advancing the transmit time of the larger cells via the phase adjustment components 130, the delay at the edges of their coverage are brought back into line with the balance of the network 114.

Based on a certain network configuration having a certain number of transmit sites at certain locations within a geographical area, a prediction tool 140 can be provided to determine a field strength associated with each transmit site and can be determined for each mobile station located at each location within the geographical area by using several parameters associated with the transmit site including transmit height, power and so on as will be described in more detail below. In some embodiments, such determined field strengths are combined based on time arrivals of different signals at each mobile station or receiver 120 and an estimation mask is employed to calculate a SINR. Such calculated SINR may be adjusted based on an applicable number of the transmit sites 110 in the geographical area and by assuming that the signals being transmitted from the transmit sites to each mobile station at each location within the geographical area are subjected to shadowing, which is log normally distributed.

The calculated or adjusted SINR may further be used by prediction tool 140, which has calculated or determined such SINR, or by another tool for, *e.g.*, network planning. Such planning may be performed for several types of networks such as CDMA, TDMA. and OFDM networks, for example. The prediction tool 140 also provides for analysis of OFDM single frequency networks (SFNs), networks including multiple transmitters 110, custom estimation masks, transmit time offsets, and log normal combining correction factors. The prediction tool 140 provides predicted SINR for an arbitrary configuration of transmitter heights, powers, transmit time and channel estimation by the receiving device 120. A suitable correction for a combination of log normal signal distributions can be applied as part of the phase adjustment process.

In one example of the above network 114, the network be deployed for Single Frequency Network (SFN) mode of operation where the transmitters 110 are synchronized to a common clock source. The clock source, for example, could be derived from a IPPS signal from the GPS, for example. The transmitted waveform can be based on Orthogonal Frequecy Division Multiplexing (OFDM) signaling and can be designed under the assumption that delay spread of a channel would be less than about 135us, for example. When multiple transmitters 110 are visible to a receiver 120, the delay spread perceived by the receiver is a function of the relative position of the receiver from venous transmitters.

In some it is possible that the receiver 120 is close to one of the transmitters 110 and far from one other transmitter thus resulting in a large delay spread. If the resulting delay spread exceeds the design specification of 135us (or other reference), it can incur significant penalty on system performance. However, it is possible to control the delay spread perceived by the receiver 120 at various points in the network by delaying or advancing a super-frame boundary with respect to a synchronization pulse from the central clock. Hence, in an optimized network deployment, it can also be to assume that there is a fixed timing offset between different transmitters 110. In a SFN deployment of a forward link only (FLO) network for example, the transmitters 110 are likely to be tuned to operate a fixed timing offset. with respect, to a central clock (and hence each other) to optimize the delay spread seen at the receiver 120 and hence the system performance.

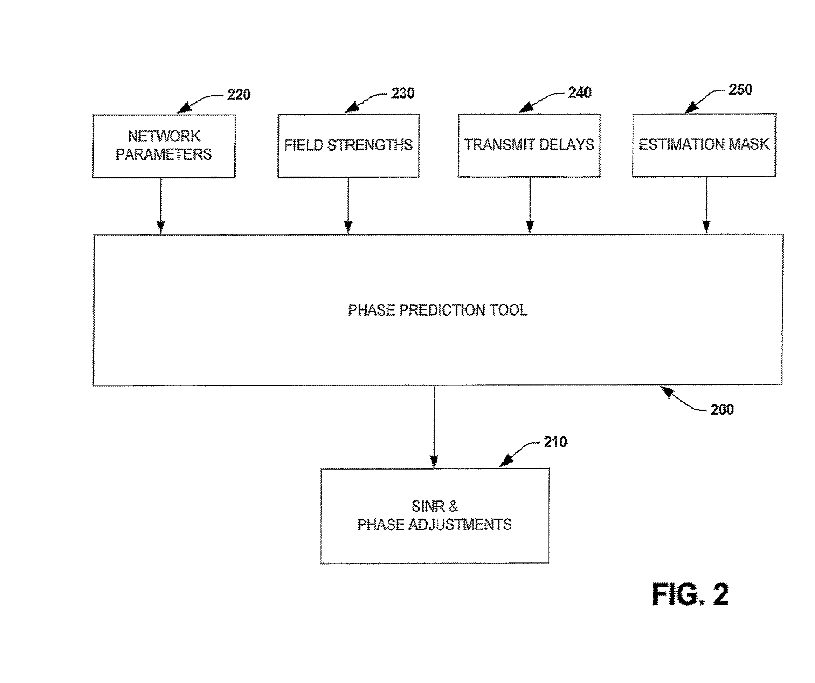

**Fig. 2** illustrates a prediction tool 200 for determining network phase adjustments. As noted above, the prediction tool 200 determines a predicted SINR and allows for determining suitable phase adjustments for a subset of transmitters at 210. In order to make these determinations, one or more network parameters 220 are considered for an arbitrary configuration of transmitters. These parameters 220 can include transmitter heights, respective transmit powers, transmit times, geographical considerations, channel estimations by one or more receiving devices, and so forth. This also includes applying appropriate corrections as desired for combinations of log normal signal distributions.

Other tool inputs include inputting field strengths at 230 by location and per transmitter if desired. Such data can be imported into the tool 200 from a respective transmitter database. At 240 and 250, relative transmit delays and estimation masks for a target receiver are considered and then applied over a specified geographic area which can also be imported as part of the network parameter 220. The SINR 210 is then calculated according to time differences and adjusted for known corrections associated with the number of transmitted signals, and their relative strengths. This process effectively incorporates the statisties of multiple partially independent log normal shadowing for a subset of singals. Output of the tool at 210 is a SINR over a specified geographic area, which may be loaded back into an existing tool, or else implemented as an embedded function in a network planning tool for adjusting transmitter phases in a given network of transmitters.

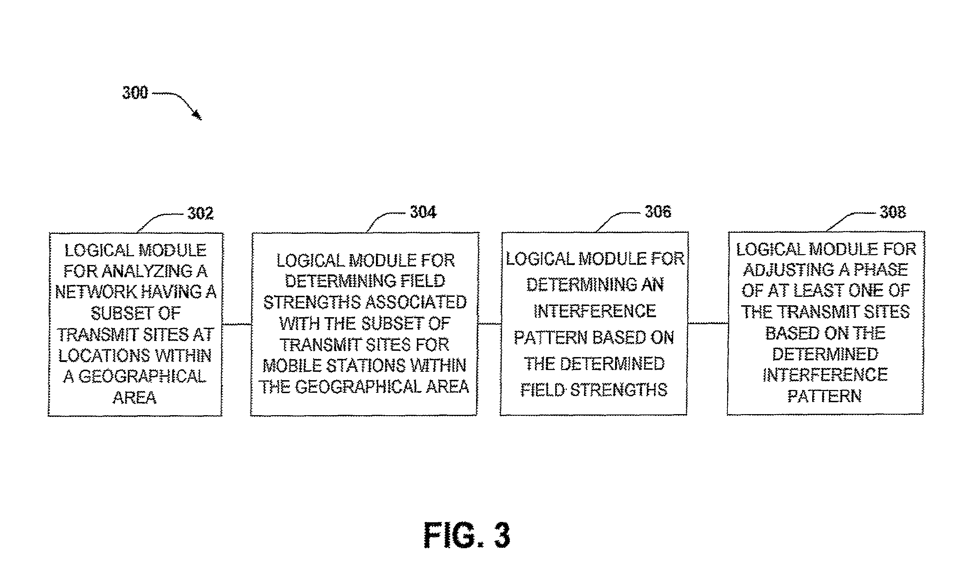

**Fig. 3** illustrates logical modules 300 for determining transmitter phase adjustments. In an example, the logical modules 300 cooperate to determine network phase adjustments for a subset of transmitters in a given geographical region. This includes a logical module 310 for analyzing a. network having a subset of transmit sites at locations within a geographical area. Such module can include software tools or algorithms that consider one or more network parameters. At 320, a logical module is provided for determining field strengths associated with the subset of transmit, sites for mobile stations within the geographical area. Such mobile can include cell phones or other transceivers or more sophisticated components such as computing tools that assist in analyzing network conditions.

At 330, a logical module is provided for determining an interference pattern based on the determined field strenghs. This can include measurements received from mobile devices that indicate the relative strength or weakness of a. given signal based upon a given transmitter phase setting. At 340, a logical module is provided for adjusting a phase of at least one of the transmit sites based on the determined interference pattern. This type of module can include electronic or software controls that allow a respective transmitter to advance or delay a respective broadcast singal in order to optimize signal performance in a given network.

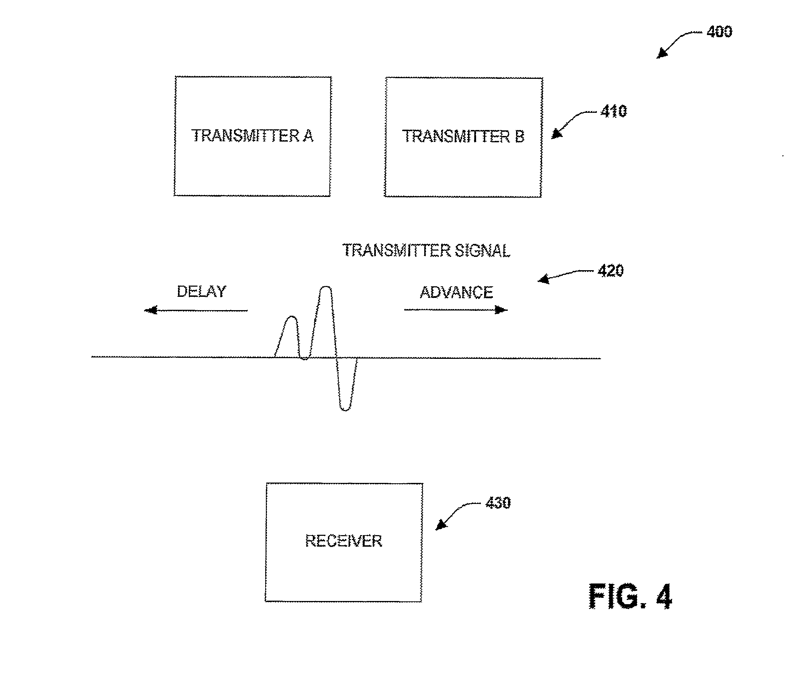

**Fig. 4** illustrates an example system 400 for adjusting timing information in a wireless positioning system. In this example, two transmitters A and B are shown at 410 however more than two may be employed. A signal the transmitters 410 can be advanced or delayed at 420 to account for possible timing differences or interferences in the system. The concept of advancing or delaying the transmitter timing at 420 is also introduced in the system so as to regulate the effective channel delay spread as perceived by the receiver 430. In one case, in an OFDM system, the linear convolution of the channel with the transmitted signal can be treated as a cyclic convolution if the delay spread of the channel is less than the cyclic prefix employed by the OFDM. signal.

In this example, consider transmitters A and B at 410 with timing offsets $d_a$ and $d_b$. Let $\tau_a$ be actual delay that would be perceived by a line of sight propagation component based on the distance between the transmitter A and the receiver 430. Similarly 1et $\tau_b$ be the actual delay that would be perceived by a line of sight component from the transmitter B to the receiver 430. Note that additional delays $d_a$ and $d_b$ are introduced at the transmitters when the delay spread $\tau_b$ - $\tau_a$ exceeds the cyclic prefix (assuming one line of sight component from each of the transmitters). With delays $d_a$ and $d_b$ at the transmitters the signal received at the receiver is given by:

**Equation 1**

$$y(n) = h_a(n) * x_a(n - d_a) + h_b(n) * x_b(n - d_b) + w(n),$$

Where $h_a(n)$ and $x_a(n)$ are the channel and the singal with respect to the transmitter A, * represents the liner convolution operation and $w(n)$ is the noise added at the receiver. In the case of traffic channel in a wide area network, $x_a(n)$ and $x_b(n)$ are generally the same (say $x(n)$).

Using the properties of linear convolution the above equation can be written

### Equation 2

$$y(n) = h_a(n - d_a) * x(n) + h_b(n - d_b) * x(n) + w(n)$$

So that the perceived channel delay spread is now given by $(\tau_b - d_b) - (\tau_a - d_a)$ and can be controlled by introducing timing offsets at the transmitter. When the effective delay spread is less than the cyclic prefix the received signal in Equation 1 can be written as the cyclic convolution instead of a linear convolution. Thus:

### Equation 3

$$y(n) = h_a(n) \otimes x_a(n - d_a) + h_b(n) \otimes x_b(n - d_b) + w(n),$$

or equivalently,

### Equation 4

$$y(n) = h_a(n - d_a) \otimes x_a(n) + h_b(n - d_b) \otimes x_b(n) + w(n)$$

where $\otimes$ denotes circular convolution. *If the cyclic prefix is long enough,* then the operation of delaying the signal $x_a(n)$ by $d_a$ in Equation 1 to result in Equation 3 can be accomplished by circular rotation of $x_a(n)$ by $d_a$ in Equation 3.

Based on the above cases, the following is proposed for the pilot positioning channel with respect to regular traffic channels. During the regular traffic channel, the cyclic prefix employed is typically short (512 chips in the case of FLO) and hence, the cyclic shift technique discussed in Equation 3 cannot be employed to regulate the effective delay spread of the channel. Therefore, the transmissions from the respective transmitters will be physically delayed (transmitters A and B by $d_a$ and $d_b$ in this example) to meet the cyclic prefix requirements. On the other hand, for the positioning pilot channel, a long cyclic prefix (of the order of 2500 chips in FLO, where chips refer to bits encoded into data packets) may be employed so as to enable the estimation of delay from weak transmitters that are far away. Further, the delays $d_a$ and $d_b$ introduced by the transmitters for the traffic channel affect the delay observations made in the positioning pilot channel, thus requiring this overheard information at the receiver as discussed previously.

Given the availability of a long cyclic prefix for the pilot positioning channel, the transmitter can undo the effect of the actual physical delays $d_a$ and $d_b$ by a cyclic shift of the positioning signal. If $x_{a,v}(n)$ is the intended positioning signal from the transmitter. A with timing delay $d_a$, then the transmitter can send out a cyclically shifted version given by $x_{a,v}(n + d_a)$. Similarly, cyclically shift the signal from the transmitter B. Due to the presence of long cyclic prefix, Equation 3 is still valid and hence:

### Equation 5

$$y(n) = h_a(n) \otimes x_{a,p}(n) + h_b(n) \otimes x_{b,p}(n) + w(n),$$

thus alleviating the need to send out the transmitter delay information to the receiver. This technique can be used to account for the transmitter timing offsets resulting from delays introduced as part of network planning as well as other timing decays that may arise due to filters, cables and such other components, for example.

Relating to another embodiment, the above discussion may assume that the range measurements are being calculated at the mobile receiver. However, it is possible that the calculations are performed in the network where the timing information is available offline. In this case, the receiver can measure pseudo ranges $S'_a$, $S'_b$ and $S'_o$, where for instance, without, taking the transmitter timing offset into account. The receiver would relay the pseudo range $S'_a$ to the network and the further corrections by the timing offsets can be easily carried out at the network since the entire almanac can be made available at the network.

The above discussion assumed hat the receiver clock is closely synchronized to the common clock and a.

mismatch between the common clock and the transmitter clock exists due to timing offset or phase adjustment at the transmitter. However, note that this can be considered a special case and the receiver clock need not be synchronised to the common clock. When the receiver clock is not synchronized to the common clock, the delay measurements from the respective transmitters can also include a common bias term, which is the amount of mismatch between the common clock and the receiver clock. The common bias is now another unknown that is to be computed in addition to the spatial co-ordinates of the receiver. The unknowns .in the spatial co-ordinates as well as the clock bias can all be solved for with the help of measurements from additional transmitters. In particular, it suffices to have measurements from *e.g.*, four different transmitters (with the timing offset information available with respect to the common clock source and assuming that the receiver is on the surface of the earth), to solve for both the spatial co-ordinates as well as the common clock bias at the receiver. In the absence of the common clock bias at the .receiver (*i.e.*, receiver clock is synchronized to the common clock), it suffices to have delay measurements from *e.g.,* three different transmitters.

Fig. 3 illustrates example network layers 500 for a wireless system where data received there from may be employed in the frequency blocks described above. Generally, the FLO air interface specification covers protocol and services corresponding to Open Systems Interconnect (OSI) networking model having Layers 1 (physical layer) 502 and Layer 2 (Data Link layer) 504. The Data Link layer is Further subdivided into two sub-layers, namely, Medium Access (MAC) sub-layer 506, and Stream sub-layer 508. Upper Layers 510 include OSI layers 3-7 and can include compression of multimedia content, access control to multimedia, alone with content and formatting of control information. The MAC layer 506 includes multiplexing and Quality of Service (QoS) delivery functions 412. The MAC layer 506 also includes logical channels 514.

The FLO air interface specification typically does not specify the upper layers to allow for design flexibility in support of various applications and services. These layers are shown to provide context. The Stream Layer includes multiplexes up to three upper layer flows into one logical channel binding of upper layer packets to steams for each logical channel, and provides packetization and residual error handling functions. Features of the Medium Access Control (MAC) Layer includes controls access to the physical layer, performs the mapping between logical channel and physical channels, multiplexes logical channels for transmission over the physical channel de-multiplexes logical channel at the mobile device, and/or enforces Quality of Service (QOS) requirements. Features of Physical Layer include providing channel structure for the forward Link, and defining frequency, modulation, and encoding requirements.

In general, FLO technology utilizes Orthogonal Frequency Division Multiplexing (OFDM), which is also utilized by Digital Audio Broadcasting (DAB), Terrestrial Digital Video Broadcasting (DVB-T), and Terrestrial Integrated Services Digital Broadcasting (ISDB-T). Generally, OFDM technology can achieve high spectral efficiency while effectively meeting mobility requirements in a large cell SFN. Also, OFDM can handle long delays from multiple transmitters with a suitable length of cyclic prefix; a guard interval added to the front of the symbol (which is a copy of the last portion of the data symbol) to facilitate orthogonality and mitigate inter-carrier interference. As long as the length of this interval is greater than the maximum channel delay, reflections of previous symbol are removed and the orthogonality is preserved.

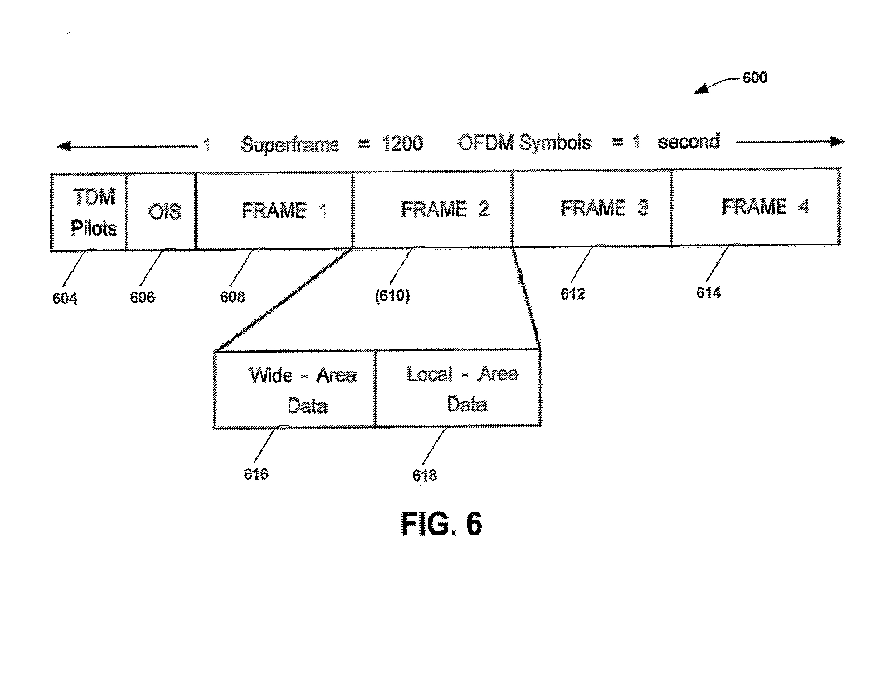

Proceeding to **Fig. 6**, a FLO physical layer superframe 600 is illustrated. In an embodiment, a superframe is about equal to 1200 OPDM symbols with a one second time duration. The FLO physical layer uses a 4K mode (yielding a transform size of 4096 sub-carriers), providing superior mobile performance compared to an SK mode, while retaining a sufficiently long guard interval that is useful in fairly large SFN cells. Rapid channel acquisition can be achieved through an optimized pilot and interleaver structure design. The interleaving schemes incorporated in the FLO air interface facilitate time diversity. The pilot structure any interleaver designs optimize channel utilization without annoying the user with long acquisition times. Generally, FLO transmitted signals are organized into super frames as illustrated at 600. Each super frame is comprised of four frames of data, including TDM pilots (Time Division Multiplexed) 604, Overhead Information Symbols (OIS) 606 and frames 608, 610, 612, 614, containing wide-area 616 and local-area data 618. The TDM pilots are provided to allow for rapid acquisition of the OIS. The OIS describes the location of the data for each media service in the super frame.

Typically, each super frame consists of 200 OFDM symbols per MHz of allocated bandwidth (1200 symbols for 6 MHz), and each symbol contains 7 interlaces of active sub-carriers. Each interlace is uniformly distributed in frequency, so that it achieves the full frequency diversity within the available bandwidth. These interlaces are assigned to logical channels that vary in terms of duration and number of actual interlaces used. This presides flexibility In the time diversity achieved by any given data source. Lower data rate channels can be assigned fewer interlaces to improve time diversity, while higher data rate channels utilize more interlaces to minimize the radio's on-time and reduce power consumption.

The acquisition time for both low and high data rate channels is generally the same. Thus, frequency and time diversity can be maintained without compromising acquisition time. Most often, FLO logical channels are used to carry real-time (live streaming) content at variable rates to obtain statistical multiplexing gains possible with variable rate codecs (Compressor and Decompressor in one). Each logical channel can have different, coding rates and modulation to support, various reliability and quality of service requirements for different applications. The FLO multiplexing scheme enables device receivers to demodulate the content of the single logical channel it is interested in to minimize power consumption. Mobile devices can demodulate multiple logical channels concurrently to enable video and associated audio to be sent on different channels.

Error correction and coding techniques can also be employed. Generally, FLO incorporates a turbo inner code13 and a Reed Solomon (RS) 14 outer code. Typically, the turbo code packet, contains a Cyclic Redundancy Check (CRC). The RS code need not be calculated for data that is correctly received which, under favorable signal conditions, results in additional power savings. Another aspect is that the FLO air interface is designed to support frequency bandwidths of 5, 6, 7, and 8 MHz, for sample. A highly desirable service offering can be achieved with a single Radio Frequency channel.

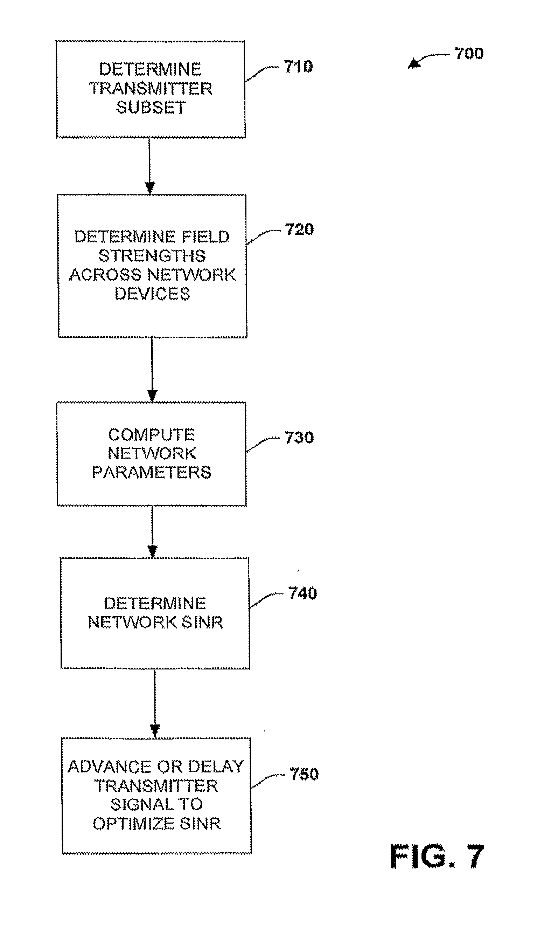

Fig. 7 Illustrates a a phase adjustment process 700 for wireless systems. While, for purposes of simplicity of explanation, the methodology is shown nd described as a series or number of acts, it is to be understood and appreciated that the processes described herein are not limited by the order of acts, as some acts may occur in different orders and/or concurrently with other acts from that shown and described herein. For example, those skilled in the art will understand and appreciate that a methodology could alternatively be represented as a series of interrelated states or events such as in a state diagram. Moreover, not all illustrated acts may be required to implement a methodology in accordance with the subject methodologies disclosed herein.

Proceeding to 710, a transmitter subset is selected for phase analysis. This may include determining which grouping or subset of transmitters may likely interfere or impact one another in a given geographical region. At 720, field strength measurements are collected across a network such as at various locations for mobile devices distributed at differing locations with respect to the transmitter subset determined above At 730, various network parameters are determined and computed. As noted above, these parameters can include transmitter heights, transmit powers, transmit times, geographical considerations, channel estimations by the mobile devices. and so forth. At 750, one or more of the transmitter in the subset defined at 710 is phase adjuster. This can include adjusting a transmitter clock, with respect to a common clock in order to mitigate interferences between transmitters. Such adjustments can be performed in increments where network SINR's are computed and phases adjusted until the respective SINR is maintained above or below a predetermined threshold.

**Fig, 8** is an illustration of a user device 800 that is employed in a. wireless communication environment, in accordance with one or more aspects set forth. herein. User device 800 comprises a receiver 802 that receives a signal from, for instance, a receive antenna. (not shown), and performs typical actions thereon (*e.g.*, filters, amplifies, down converts, *etc.*) the received signal and digitizes the conditioned signal to obtain samples. Receiver 802 can be a non-linear receiver, such as a maximum likehood (ML)-MMSE receiver or the like. A demodulator 804 can demodulate and provide received pilot symbols to a processor 806 for channel estimation. A FLO channel component 810 is provided to process FLO signals as previously described. This can include digital stream processing and/or positioning location calculations among other processes. Processor 806 can be a processor dedicated to analyzing information received by receiver 802 and/or generating information for transmission by a transmitter 816, a processor that control one or more components of user device 800, and/or a processor that both analyzes information received by receiver 802, generates information for transmission by transmitter 816, and controls one or more component of user device 800, User device 800 can additionally comprise memory 808 that is operatively coupled to processor 806.

It will be appreciated that the data store (*e.g.,* memories) components described herein can be either volatile memory or nonvolatile memory, or can include both volatile and nonvolatile memory. By way of illustration, and not limitation, nonvolatile memory can include read only memory (ROM), programmable ROM (PROM), electrically programmable ROM (EPROM), electrically erasable ROM (EEPROM), or flash memory. Volatile memory can include random access memory (RAM), which, acts as external cache memory. By way of illustration and not limitation, RAM is available in many forms such as synchronous RAM (SRAM), dynamic RAM (DRAM), synchronous DRAM (SDRAM), double data rate SDRAM: (DDR SORAM), enhanced SDRAM (ESDRAM), Synchlink DRAM (SLDRAM), and direct Rambus RAM (DRRAM). The memory 808 of the subject systems and methods is intended to comprise, without being limited to, these and any other suitable types of memory. User device 800 further comprises a background monitor 814 for processing FLO data, a symbol modulator 814 and a transmitter 816 that transmits the modulated signal.

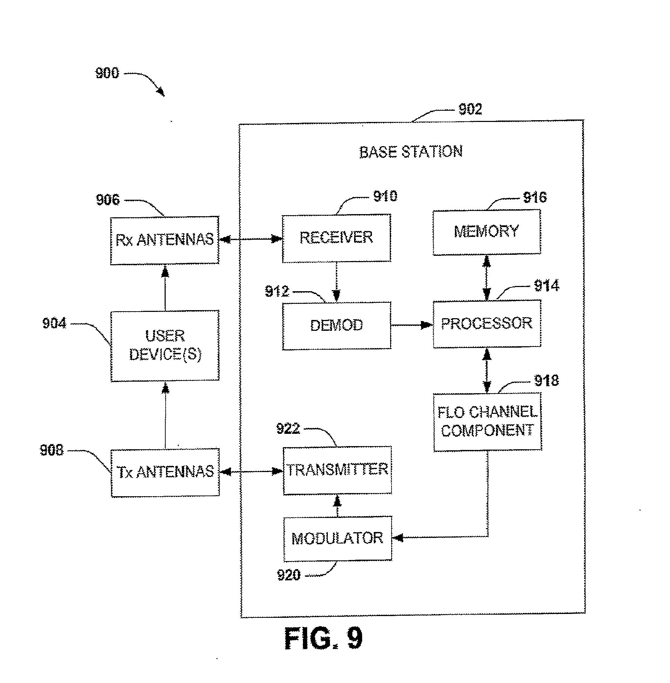

**Fig. 9** is an illustrates an example system 900 that comprises a base station 902 with a receiver 910 that revives signal(s) from one or more user devices 904 through a plurality of receive antennas 906, and a transmitter 924 that transmits to the one or more user devices 904 through a transmit antenna 908. Receiver 910 can receive information from receive antennas 906 and is operatively associated with a demodulator 912 that demodulates received information. Demodulated symbols are analyzed by a processor 914 that is similar to the processor described, above, and which is coupled to a memory 916 that stores information related to user ranks, lookup tables related thereto, and/or any other suitable information related to performing the various actions and functions set forth herein. Processor 914 is further coupled to a FLO channel 918 component that facilitates processing FLO information associated with one or more respective user device 904. A modulator 922 can multiplex a. signal for transmission by a transmitter 924 through transmit antenna 908 to user devices 904. FLO channel component 918 can append information to a signal related to an updated data stream for a given transmission stream for communication with a user device 904, which can be transmitted to user device 904 to provide an indication that a new optimum channel has been identified and acknowledged.

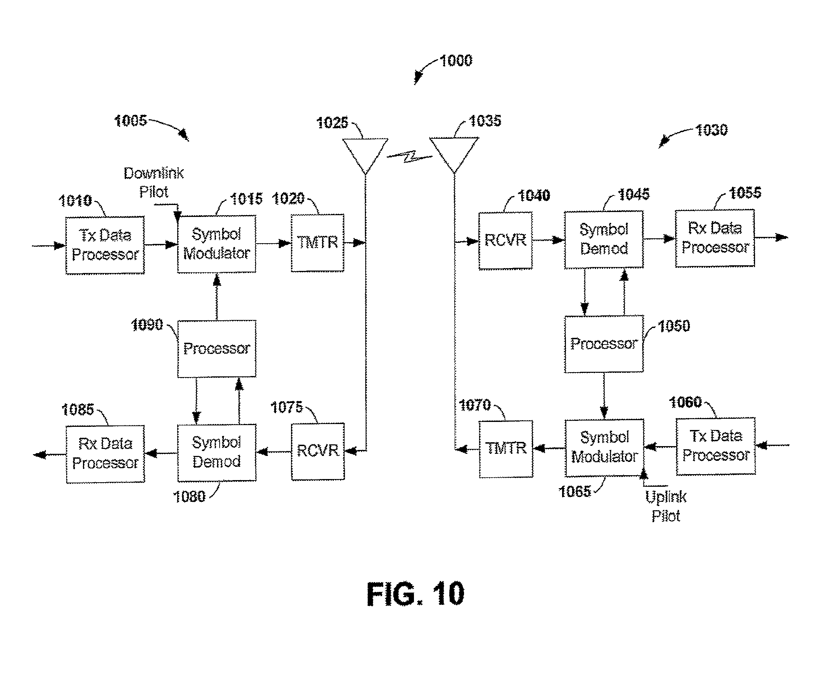

**Fig. 10** shows an exemplary wireless communication system 1000. The wireless communication system 1000 depicts one base station and one terminal for sake of brevity. However, it is to be appreciated that the system can include more than one base station and/or more than one terminal wherein additional base stations and/or terminals can be substantially similar or different for the exemplary base station and terminal described below.

Referring now to Fig. 10, on a. downlink, at access point 1005 , a transmit (TX) data processor 1010 receives, formats, codes, interleaves, and modulates (or symbol maps) traffic data and provides modulation symbols ("data symbol"). A symbol modulator 1015 receives and processes the data symbols and pilot symbols and provides a stream of symbols. A symbol modulator 1020 multiplexes data and pilot symbols and provides them to a transmitter unit (TMTR) 1020. Each transmit symbol may be a data symbol a pilot symbol, or a. signal value of zero. The pilot symbols may be sent continuously in each symbol period. The pilot symbols can be frequency division multiplexed (FDM), orthogonal frequency division multiplexed (OFDM), time division multiplexed (TDM), frequency division multiplexed (FDM), or code divison multiplexed (CDM),

TMTR 1020 receives and converts the stream of symbols into one or more analog signals and further conditions (*e.g.,* amplifies, filters, and frequency up converts) the analog signals to generate a downlink signal suitable for trasmission over the wireless channel The downlink signal is then transmitted through an antenna 1025 to the terminals. At terminal 1030, an antenna 1035 receives the downlink signal and provides a received signal to a receiver unit (RCVR) 1040. Receiver unit 1040 conditions (*e.g.,* filters, amplifies, and frequency down converts) the received signal and digitizes the conditioned signal to obtain samples. A symbol demodulator 1045 demodulates and provides received pilot symbols to a. processor 1050 for channel estimation Symbol demodulator 1045 further receives a frequency response estimate for the downlink from processor 1050, performs data, demodulation on the received data symbols to obtain data symbol estimates (which are estimates of the transmitted data symbols), and provides the data symbol estimates to an RX data processor 1055, which demodulates (*i.e.,* symbol de-maps), de-interleaves, and decodes the data symbol estimates to recover the transmitted traffic data. The processing by symbol demodulator 1045 and RX data processor 1055 is complementary to the processing by symbol modulator 1015 and TX data processor 1010, respectively, at access point 1005.

On the uplink a TX data processor 1060 processes traffic data and provides data symbols. A symbol modulator 1065 receives and multiplexes the data symbols with pilot symbols, performs modulation, and provides a stream of symbols. A transmitter unit 1070 then receives and processes the stream of symbols to generate an uplink signal, which is transmitted by the antenna 1035 to the access point 1003.

At access point 1005, the uplink signal from terminal 1030 is receive by the antenna 1025 and processed by a receiver unit 1075 to obtain samples, A symbol demodulator 1080 then processes the samples and provides received pilot symbols and data symbol estimates for the uplink. An RX data processor 1085 processes the data symbol estimates to recover the traffic data transmitted by terminal 1030. A processor 1090 performs channel estimation for each active terminal transmitting on the uplink. Multiple terminals may transmit pilot concurrently on the uplink on their respective assigned sets of pilot subbands, where the pilot subband sets may be interlaced.

Processors 1090 and 1050 direct. (*e.g.,* control, coordinate, manage, *etc.*) operation at access point 1005 and terminal 1030, respectively. Respective processors 1090 and 1050 can be associated with memory units (not shown) that store program codes and data. Processors 1090 and 1050 can also perform computations to derive frequency and impulse response estimates for the uplink and downlink, respectively.

For a multiple-access system (*e.g.,* FDMA, OFDMA, CDMA, TDMA, *etc.*), multiple terminals can transmit: concurrently on the uplink For such a system, the pilot, subbands may be shared among different terminals. The channel estimation techniques may be used in cases where the pilot subbands for each terminal span the entire operating band. (possibly except for the band edges). Such a pilot subband structure would be desirable to obtain frequency diversity for each terminal. The techniques described herein may be implemented by various means. For example, these techniques may be implemented in hardware software, or a combination thereof. For a. hardware implementation, the processing units used for channel estimation may be implemented within one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units designed to perform the functions described herein, or a combination thereof. With software, implementation can be through modules (*e.g.*, procedures, functions, and so on) that perform the functions described herein. The software codes may be stored in memory unit and executed by the processors 1090 and 1050.

For a. software the techniques described herein may be implemented with modules (*e.g.*, procedures, functions, and so on) that perform the functions described herein, The software codes may be stored in memory units and executed by processors. The memory unit may be implemented within the processor or external to the processor, in which is can be communicatively coupled to the processor via, various means as is known in the art..

What has been described above includes exemplary embodiments. It is, of course, not possible to describe every conceivable combination of components or methodologies for purposes of describing the embodiments, but one of ordinary skill in the art may recognize that many further combinations and permutations are possible. Accordingly, these embodiments are intended to embrace all such alterations, modifications and variations that fall within the spirit and scope of the appended claims. Furthermore, to the extent that the term "includes" is used in either the detailed description or the claims, such term is intended to be inclusive in a manner similar to the term as "comprising" is interpreted when employed as a transitional word in a claim.

In the following, further examples are described to facilitate the understanding of the invention:

1 A method to increase broadcast coverage in a wireless network, comprising:

adjusting a signal phase of at least one transmitter clock in view of determined transmitter parameter information; and
broadcasting the signal phase across a. wireless network to increase broadcast coverage of the wireless network.

2 The method of 1, further comprising advancing or delaying broadcast signals and recording a signal strength throughout a network.

3 The method of 2, further comprising determining a signal interference and noise ratio (SINR) across a. wireless network.

4 The method of 3, further comprising increasing or decreasing a cyclic prefix duration.

5 The method of 3, further comprising adjusting a transmit time of a nominally sized transmitter cell to facilitate SINR across the wireless network.

6 The method of 1, further comprising determining a field strength associated with a. transmit site and determining field strengths for each mobile station located within a geographical area served by the transmit site.

7 The method of 6, the field strengths are combined based on time arrivals of different signals at each mobile station.

8 The method of 7, further comprising employing an estimation mask to calculate an SINR..

9 The method of 8. further comprising determining the SINR based on a log normal log normal signal distribution.

10 The method of 7, further comprising analyzing single frequency networks (SFNs), custom estimation masks, transmit time offsets, and log normal combining correction factors.

11 The method of 10, further comprising analyzing transmitter heights, transmitter powers, transmit times and channel estimations by one or more receiving devices.

12 The method of 11, further comprising determining a correction for a combination of log normal signal distributions that are applied as part of a phase adjustment process.

13 The method of 11, further comprising determining a delay spread across one or more receivers.

14 The method of 13, further comprising delaying or advancing a super- frame boundary with respect to a synchronization pulse from a central clock.

15 A machine readable medium having machine readable instructions stored thereon, comprising:

configuring a network having a number of transmit sites at locations within a geographical area;
determining a field strength associated with the transmit sites for mobile stations within the geographical area;
calculating a signal interference and noise ratio (SINR) based on the determined field strengths; and
adjusting one or more signal phases at the transmit sites based on the SINR

16 The machine readable medium of 1, wherein adjusting further comprises:

employing signals transmitted from the transmit sites that have a. log normal distribution,

17 The machine readable medium of 15, further comprising using the SINR to plan how a network is configured.

18 The machine readable medium of 15, further comprising processing one or more network parameters that include transmitter heights, transmit powers, transmit times, geographical considerations, or channel estimations by one or more receiving devices.

19 The machine readable medium of 18, further comprising determining one or more relative transmit delays and estimation masks for a target receiver that are applied over a specified geographic.

20 The machine readable medium of 15, further comprising calculating time differences and adjusting for known corrections associated with q number of transmitted signals that includes relative signal strengths.

21 The machine readable medium of 20, further comprising incorporating statistics of partially independent log normal shadowing for a. subset of signals.

22 A component to determine network phase adjustments, comprising:

means for analyzing a network having a subset of transmit sites at locations within a. geographical area;
means for determining field strengths associated with the subset of transmit sites for mobile stations within the geographical area;
means for determining at interference pattern based on the determined field strengths; and
means for adjusting a. phase of at least one of the transmit sites based on the determined interference pattern.

23 A wireless communicatlons processor, comprising:

a memory that includes a component, to analyze a wireless field strengths in a. given geographical area, and
at least one processor to generate transmitter phase adjustments for at least one transmitter in a transmitter subset to mitigate transmitter interference in the geographical area.

24 A wireless communications apparatus, comprising:

a component to determine signal strengths from a subset of transmitters;
a processor to determine a phase adjustment for at least one transmitter form the subset, of transmitters; and
a generator to transmit the phase adjustment across a wireless network.

25 The apparatus of 24, further comprising a component to determine a signal interference and noise ratio (SINR) for the wireless network.

26 A base station for a wireless communications system, comprising:

a component, to adjust a signal phase of a wireless transmitter;
a processor to determine an interference pattern in view of at least: one other transmitter broadcast; and
a transmitter to broadcast, the signal phase across a wireless network.

27 An access point for a wireless communications system, comprising;

a. component to receive a signal from a subset of wireless transmitters;
a. component to determine a signal interference and noise ratio (SINR) for the subset of wireless transmitters; and
a component process a phase adjustment from the wireless transmitters in view of the SINR.

**Claims**

1. A method to increase broadcast coverage in a wireless network, comprising:

adjusting at least one transmitter clock of at least one transmitter of a plurality of transmitters of a wireless network based on at least one transmitter parameter information;
regulating effective channel delay spread as perceived by a receiver in the wireless network by advancing or delaying a signal based on the adjusted at least one transmitter clock, wherein the effective channel delay spread is a function of perceived delay from each of the plurality of transmitters to the receiver; and

broadcasting the signal across the wireless network to increase broadcast coverage of the wireless network.

2. The method of claim 1, further comprising recording a strength of the signal throughout the wireless network.

3. The method of claim 2, further comprising determining a signal interference and noise ratio (SINR) across the wireless network.

4. The method of claim 3, further comprising increasing or decreasing a cyclic prefix duration of the signal.

5. The method of claim 3, further comprising adjusting a transmit time of a nominally sized transmitter cell to facilitate the SINR across the wireless network.

6. The method of claim 1, further comprising determining a field strength associated with a transmit site within the wireless network and determining field strengths for each mobile station located within a geographical area served by the transmit site.

7. The method of claim 6, wherein the field strengths are combined based on time arrivals of different received signals at each mobile station.

8. The method of claim 7, further comprising employing an estimation mask to calculate a SINR at each mobile station.

9. The method of claim 8, further comprising determining the SINR based on a log normal signal distribution.

10. A machine readable medium comprising instructions, which, when executed on a computer, cause the computer to perform a method of any one of claims 1 to 9.

11. A base station for a wireless communications system, comprising:

a component to adjust a transmitter clock of a wireless transmitter based on at least one transmitter parameter information;
a processor to advance or delay a signal based on the adjusted at least one transmitter clock so as to regulate effective channel delay spread as perceived by a mobile station in a geographical area, wherein the effective channel delay spread is based on a perceived delay from each of a plurality of transmitters to the mobile station; and
a transmitter to broadcast the signal across the wireless network to increase broadcast coverage of the wireless network.

12. The base station of claim 11, further comprising a component to determine network phase adjustments, the component comprising:

means for analyzing a network having a subset of transmit sites at locations within a geographical area;
means for determining field strengths associated with the subset of transmit sites for mobile stations within the geographical area;
means for determining an interference pattern based on the determined field strengths; and
means for adjusting a signal phase of at least one of the transmit sites based on the determined interference pattern so as to regulate effective channel delay spread as perceived by at least one of the mobile stations within the geographical area.

13. The base station of claim 11, further comprising a wireless communications processor, the wireless communications processor comprising:

a memory that includes a component to analyze wireless field strengths in a given geographical area; and
at least one processor to generate transmitter clock adjustments for at least one transmitter in a transmitter subset to mitigate transmitter interference in the geographical area, wherein the transmitter clock adjustments are generated based at least in part on the analyzed wireless field strengths,
wherein the transmitter clock adjustments are relied on to advance or delay a signal so as to regulate effective channel delay spread as perceived by a mobile station in the geographical area.

**14.** The base station of claim 11, further comprising a wireless communications apparatus, the apparatus comprising:

a component to determine signal strengths from a subset of transmitters;
a processor to determine a transmitter clock adjustment for at least one transmitter from the subset of transmitters based at least in part on the determined signal strengths,
wherein the transmitter clock adjustment is relied on to advance or delay a signal so as to regulate effective channel delay spread as perceived by a mobile station in a geographical area; and
a generator to transmit the transmitter clock adjustment across a wireless network.

**15.** The base station of claim 11, further comprising an access point for a wireless communications system, the access point comprising:

a component to receive a signal from a subset of wireless transmitters;
a component to determine a signal interference and noise ratio (SINR) for the subset of wireless transmitters; and
a component to process a transmitter clock adjustment from the wireless transmitters in view of the SINR,
wherein the transmitter clock adjustment is relied on to advance or delay a signal so as to regulate effective channel delay spread as perceived by a mobile station in the geographical area.

EP 2 367 333 A2

**FIG. 1**

FIG. 2

EP 2 367 333 A2

FIG. 3

FIG. 4

EP 2 367 333 A2

Fig. 5

EP 2 367 333 A2

Superframe = 1200 OFDM Symbols = 1 second

| TDM Pilots | OIS | FRAME 1 | FRAME 2 | FRAME 3 | FRAME 4 |
|---|---|---|---|---|---|

604    606    608    (610)    612    614

| Wide - Area Data | Local - Area Data |
|---|---|

616    618

**FIG. 6**

DETERMINE TRANSMITTER SUBSET — 710

DETERMINE FIELD STRENGTHS ACROSS NETWORK DEVICES — 720

COMPUTE NETWORK PARAMETERS — 730

DETERMINE NETWORK SINR — 740

ADVANCE OR DELAY TRANSMITTER SIGNAL TO OPTIMIZE SINR — 750

700

FIG. 7

FIG. 8

**FIG. 9**

EP 2 367 333 A2

FIG. 10

**REFERENCES CITED IN THE DESCRIPTION**

**Patent documents cited in the description**

- US 78926506 P
- US 76256406 P